# DEMANDE DE BREVET EUROPEEN

(11) **EP 1 459 940 A1**
(43) Date de publication de la demande: **22.09.2004**
(21) Numéro de dépôt: 04290083.7
(22) Date de dépôt: 13.01.2004
(51) Int. Cl.: B60R 16/02

(54) **Système de sécurisation de sorties de signaux de commande d'une unité de traitement d'informations**

(30) Priorité: 18.03.2003 FR 0303310
(71) Demandeur: Peugeot Citroen Automobiles SA, 78140 Vélizy Villacoublay (FR)
(72) Inventeur: Dhainaut, Jean-Marc, 75015 Paris (FR); Charton, Eric, 91470 Forges-les-Bains (FR)
(74) Mandataire: Habasque, Etienne Joel Jean-François

(57) **Abrégé**

Ce système de sécurisation de sorties de signaux de commande d'une unité de traitement d'informations embarquée à bord d'un véhicule automobile, dans lequel l'unité de traitement d'informations (14) est associée à des moyens (15) de commutation de puissance d'alimentation d'organes fonctionnels du véhicule, pilotés sur la base de signaux de commande issus de l'unité de traitement d'informations, est caractérisé en ce que des moyens (19) de maintien de sécurité des signaux de commande délivrés par l'unité de traitement d'informations (14) sont interposés entre celle-ci et les moyens de commutation de puissance (15) et présentent une entrée d'inhibition (20) raccordée à une sortie (21) d'état de fonctionnement opérationnel de l'unité de traitement d'informations (14).

## Description

La présente invention concerne un système de sécurisation de sorties de signaux de commande d'une unité de traitement d'informations embarquée à bord d'un véhicule automobile.

On sait qu'un nombre croissant d'unités de traitement d'informations de ce type est embarqué à bord des véhicules automobiles pour assurer la commande de différentes fonctions et organes fonctionnels de ceux-ci, à travers par exemple des moyens de commutation de puissance d'alimentation de ceux-ci, dont le fonctionnement est piloté sur la base des signaux de commande issus de l'unité de traitement d'informations.

De telles unités sont alors intégrées dans des architectures électroniques multiplexées utilisant des réseaux de transmission d'informations entre les différents éléments connectés.

De telles unités de traitement d'informations sont par exemple des unités appelées « boîtier de servitudes intelligent », « boîtier de servitudes de moteur » ou encore « boîtier de servitudes de coffre ».

Ainsi, les nouvelles générations de véhicules automobiles disposent d'une architecture électrique/électronique embarquée comportant par exemple plusieurs réseaux de type CAN intersystèmes, VAN confort et VAN carrosserie ou CAN confort et CAN carrosserie, connectés à différents calculateurs, tels que par exemple un calculateur central d'habitacle intégré au boîtier de fusibles habitacle du véhicule, également appelé BSI pour boîtier de servitudes intelligent et qui gère un grand nombre de fonctions du véhicule en assurant notamment :
- une fonction de passerelle entre les différents réseaux multiplexés (CAN intersystèmes, VAN confort, VAN carrosserie, CAN confort, CAN carrosserie) ;
- la commande des modules électroniques situés sur le réseau VAN carrosserie ou CAN carrosserie ;
- la distribution et la protection électrique par fusibles ou autres moyens, des alimentations électriques vers les calculateurs et actionneurs, en particulier ceux situés dans l'habitacle du véhicule ;
- la gestion des modes de veille et de réveil du véhicule et en particulier le pilotage de l'alimentation +VAN ou +CAN des calculateurs des réseaux confort et carrosserie ;
- le pilotage direct d'actionneurs situés notamment dans l'habitacle (dont celui des feux de position avant et/ou arrière, de l'essuie-vitre avant, des feux de brouillard arrière, ...).

Ces véhicules disposent également d'un module électronique multiplexé intégré au boîtier de fusibles du compartiment moteur appelé BSM pour boîtier de servitudes de moteur, connecté au réseau VAN ou CAN et assurant notamment :
- l'interconnexion entre les faisceaux du compartiment moteur situés sur la carrosserie et les faisceaux du compartiment moteur situés sur le groupe motopropulseur ;
- la distribution et la protection électriques par fusibles ou autres moyens, des alimentations électriques vers les calculateurs et actionneurs, en particulier ceux situés dans le compartiment moteur ;
- le pilotage, sur ordre du BSI via le réseau VAN ou CAN, d'actionneurs situés dans le compartiment moteur (dont celui des projecteurs : feux de position avant, feux de croisement, feux de route, feux de brouillard avant, etc ...) ;
- l'acquisition à l'attention du BSI via le réseau VAN carrosserie, des sorties de capteurs situés dans le compartiment moteur.

Ces véhicules sont également équipés d'un module électronique multiplexé intégré à la commutation sous volant, appelé COM2000, connecté au réseau VAN ou CAN et assurant notamment :
- l'acquisition des commandes du conducteur (éclairage/signalisation, essuyage/lavage, radio, régulateur de vitesse, etc..) ;
- la transmission à l'attention du BSI via le réseau VAN ou CAN des commandes du conducteur (éclairage/signalisation, essuyage/lavage, radio, régulateur de vitesse, etc...).

Dans certains véhicules, on prévoit également l'implantation d'un module électronique multiplexé intégré à l'arrière du véhicule, appelé BSC pour boîtier de servitudes de coffre, connecté au réseau CAN carrosserie et assurant notamment :
- la distribution et la protection électrique par fusibles ou autres moyens, des alimentations électriques vers les calculateurs et actionneurs, en particulier ceux situés dans le compartiment de coffre du véhicule ;
- le pilotage, sur ordre du BSI via le réseau CAN carrosserie d'actionneurs situés dans le compartiment de coffre dont celui des feux : feux de position arrière, feux de stop, feux de brouillard arrière, etc..).

Cette nouvelle architecture électronique/électrique multiplexée intervient dans le pilotage de fonctions de sécurité, telles que notamment l'éclairage/signalisation, l'essuyage/lavage, etc ...

Une telle architecture électrique/électronique multiplexée permet :
- d'optimiser le coût, la masse, la fiabilité du système électrique/électronique en réduisant le nombre de fils et d'interconnexions ;
- d'améliorer la testabilité en permettant notamment de lire l'état des capteurs et commandes et de piloter les actionneurs, au moyen d'un outil de diagnostic connecté au BSI via une prise de diagnostic du véhicule ;
- d'offrir facilement et à moindre coût, de nouvelles fonctionnalités à partir d'informations existantes ou grâce à l'ajout de capteurs comme par exemple la mise en marche automatique de l'essuie-vitre arrière lors du passage de la marche arrière du véhicule, si les essuie-vitres avant sont en fonctionnement, l'adaptation automatique de la vitesse de balayage des essuie-vitres en fonction de l'intensité de la pluie, l'allumage automatique des feux en cas de pluie ou de faible luminosité, etc...

De nombreux véhicules de nouvelle génération vont donc disposer ou disposent déjà d'architectures de ce type.

Cependant, ces structures présentent un certain nombre d'inconvénients et notamment un risque de perte de fonction par exemple lors d'une réinitialisation de l'une de ces unités de traitement d'informations embarquées.

En effet, une réinitialisation par exemple d'une unité de traitement d'informations se traduit tout d'abord par le passage de la majeure partie des broches de celle-ci en haute impédance. Puis, la majeure partie des broches de cette unité sont configurées automatiquement en entrée. A cet instant, la réinitialisation se termine et l'unité lance le logiciel correspondant. Puis la couche basse du logiciel (interface logiciel matériel également appelée I.L.M.) est initialisée. L'I.L.M. configure alors certaines broches de l'unité, choisies lors de la conception de celle-ci, en sortie, et positionne toutes les sorties à un état dit « inactif ». L'I.L.M. lance alors le logiciel applicatif et cet applicatif, durant son fonctionnement, effectue une lecture périodique des entrées et une écriture périodique des sorties.

Dans la suite de la description, deux types de sortie vont être évoqués et sont à distinguer. Ces deux types de sortie sont, pour l'un, une sortie de signal, et pour l'autre, une sortie de puissance. Une sortie de signal est une sortie de l'unité de traitement d'informations qui se situe avant les moyens de commutation de puissance d'alimentation associée à cette unité. Une sortie de puissance est située après l'étage de puissance et sort systématiquement sur un connecteur du boîtier correspondant. Une sortie de puissance est commandée par une sortie de signal.

En fait, l'étage de puissance sert à alimenter les organes fonctionnels du véhicule et à piloter ceux-ci sur la base des signaux de commande issus de l'unité de traitement d'informations.

Lors d'une réinitialisation d'une unité de traitement d'informations, certaines sorties de signal passent en haute impédance. Cet état particulier provoque un niveau de tension indéfini sur ces sorties de signal. Pour obtenir un état stable, c'est-à-dire un niveau de tension défini, il faut forcer les sorties de signal avec des résistances de polarisation haute ou basse. Ceci implique que l'état d'une sortie de signal et donc de puissance pendant une réinitialisation, est défini une fois pour toutes de façon matérielle.

Or, il peut apparaître des cas dans lesquels l'état des sorties de puissance est incompatible avec l'état dans lequel se trouve le boîtier correspondant. Par exemple, lors d'une réinitialisation d'une unité de traitement d'informations alors que le véhicule a ses feux de position allumés, si la sortie de signal de commande du relais des feux de position est mise à la masse par une résistance de polarisation basse, la commande du relais n'est plus assurée (la sortie du relais est une sortie de puissance) bien que le commode soit en position « feux de position ».

Il n'y a donc pas de conservation de l'état des sorties de signal (et donc de puissance) pendant une réinitialisation d'une unité de traitement d'informations. Le logiciel n'étant pas opérationnel pendant la phase de réinitialisation, il ne peut rien faire contre cet état de fait.

Le but de l'invention est donc de résoudre ces problèmes.

A cet effet, l'invention a pour objet un système de sécurisation de sorties de signaux de commande d'une unité de traitement d'informations embarquée à bord d'un véhicule automobile, dans lequel l'unité de traitement d'informations est associée à des moyens de commutation de puissance d'alimentation d'organes fonctionnels du véhicule, pilotés sur la base de signaux de commande issus de l'unité de traitement d'informations, caractérisé en ce que des moyens de maintien de sécurité des signaux de commande délivrés par l'unité de traitement d'informations sont interposés entre celle-ci et les moyens de commutation de puissance et présentent une entrée d'inhibition raccordée à une sortie d'état de fonctionnement opérationnel de l'unité de traitement d'informations.

Suivant d'autres caractéristiques :
- l'unité de traitement d'informations est intégrée dans un boîtier de servitudes intelligent ;
- l'unité de traitement d'informations est intégrée dans un boîtier de servitudes de moteur ;
- l'unité de traitement d'informations est intégrée dans un boîtier de servitudes de coffre ; et
- les moyens de maintien sont réalisés à base de portes ET/OU.

L'invention sera mieux comprise à la lecture de la description qui va suivre donnée uniquement à titre d'exemple et faite en se référant aux dessins annexés, sur lesquels :
- la figure 1 représente de façon schématique un véhicule dans lequel on a illustré une partie d'architecture électrique/électronique multiplexée ;
- les figures 2, 3, et 4 illustrent des schémas électriques respectivement d'un boîtier de servitudes intelligent, d'un boîtier de servitudes de moteur et d'un boîtier de servitudes de coffre intégrant un système de sécurisation selon l'invention ; et
- la figure 5 représente un exemple de réalisation d'un tel système de sécurisation à l'aide de portes.

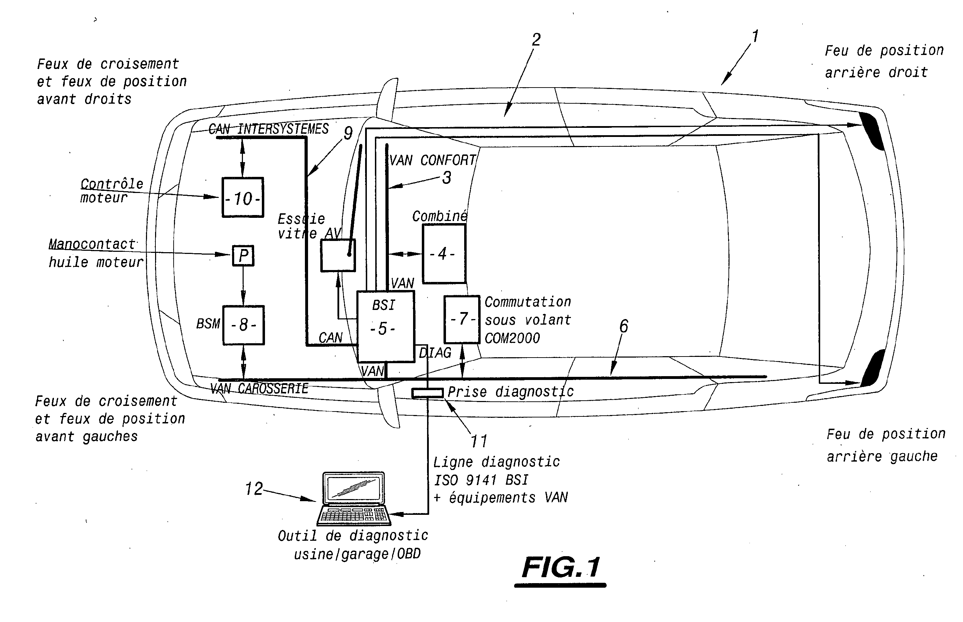

On a en effet illustré sur la figure 1, un véhicule automobile qui est désigné par la référence générale 1 et dans lequel est intégrée une architecture électrique/électronique à base de réseaux multiplexés, cette architecture étant désignée par la référence générale 2.

Cette architecture comporte plusieurs organes qui sont reliés par des réseaux multiplexés de transmission d'informations tels que par exemple un réseau VAN de confort, désigné par la référence générale 3, entre un combiné d'instrumentation 4 du véhicule et un boîtier de servitudes intelligent (BSI) désigné par la référence générale 5, et un réseau VAN de carrosserie désigné par la référence générale 6, entre le boîtier de servitudes intelligent et un système de commutation sous volant 7, également connu sous le nom de COM 2000, et un boîtier de servitudes de moteur (BSM) désigné par la référence générale 8.

Un réseau de type CAN intersystèmes peut également être prévu entre le boîtier de servitudes intelligent et une unité de contrôle de moteur, ce réseau CAN intersystèmes étant désigné par référence générale 9 et l'unité de contrôle de moteur étant désignée par la référence générale 10.

Le boîtier de servitudes intelligent est également associé à une prise de diagnostic désignée par la référence générale 11, à laquelle peut être raccordé un outil de diagnostic tel que l'outil désigné par la référence générale 12 sur cette figure 1.

Différents organes fonctionnels du véhicule tels que par exemple les feux de croisement et les feux de position avant du véhicule, les essuie-vitres, les feux de position arrière du véhicule, etc, peuvent être contrôlés par ces différents boîtiers.

Comme cela est indiqué précédemment, différents types de boîtiers peuvent être envisagés tels que le boîtier de servitudes intelligent, le boîtier de servitudes de moteur ou encore un boîtier de servitudes de coffre.

En fait, et de façon schématique, un boîtier de servitude comporte une unité de traitement d'informations, à base par exemple de micro-contrôleur ou de calculateur, associée à des moyens de commutation de puissance d'organes fonctionnels du véhicule, pilotés sur la base de signaux de commande issus de l'unité.

Les signaux de commande issus de l'unité de traitement d'informations sont appelés « sortie de signal » tandis que les signaux issus des moyens de commutation de puissance d'alimentation également appelé étage de puissance, sont également appelés « sortie de puissance ».

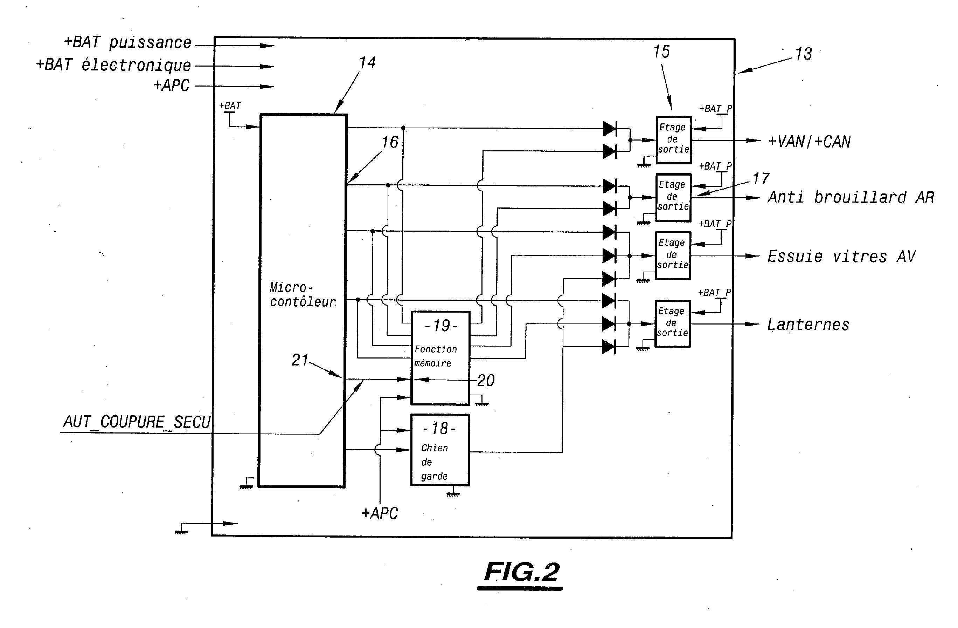

On a illustré sur la figure 2, une partie d'un boîtier de servitudes intelligent.

Ce boîtier est désigné par la référence générale 13 sur cette figure 2, et est raccordé à la source d'alimentation en énergie du véhicule telle que par exemple une batterie, et à la masse. Ce boîtier reçoit également un signal de plus après contact (+ APC) délivré par les moyens de mise sous tension du véhicule.

En fait, chaque boîtier comporte une unité de traitement d'informations par exemple à base de micro-contrôleur, désignée par la référence générale 14, et qui délivre des sorties de signal de commande à des moyens de commutation de puissance d'alimentation désignés par la référence générale 15 sur cette figure et qui comportent un étage de sortie de puissance pour chaque sortie de signal de commande de l'unité de traitement d'informations.

Ainsi par exemple, l'unité de traitement d'informations présente une sortie de signal 16 de commande de l'allumage/extinction d'un feu anti-brouillard arrière du véhicule à travers un étage de sortie 17 correspondant.

Un système de type « chien de garde » désigné par la référence générale 18, de type classique, peut également être associé aux commandes de certains organes fonctionnels tel que par exemple les essuie-vitres avant du véhicule, etc.

Pour résoudre les problèmes évoqués précédemment concernant la perte de sortie de signal lors d'une réinitialisation de l'unité de traitement d'informations, on intègre dans le boîtier de servitudes, des moyens de maintien de sécurité des signaux de commande délivrés par cette unité de traitement d'informations. Ces moyens sont désignés par la référence générale 19 sur cette figure 2, et sont donc interposés entre l'unité de traitement d'informations et les moyens de commutation de puissance d'alimentation et présentent une entrée d'inhibition désignée par la référence générale 20 raccordée à une sortie 21 d'état de fonctionnement opérationnel de l'unité.

En fait, ces moyens de maintien se présentent sous la forme d'un circuit matériel de mémorisation de l'état précédent du signal, appelé « fonction mémoire » des sorties de signal, alimenté par le plus après contact (+ APC) du véhicule et dont le fonctionnement est inhibé par la réception d'un signal piloté par le logiciel intégré dans le micro-contrôleur, qui assure, en l'absence de ce signal, un mode de fonctionnement de sécurisation consistant à maintenir l'état des différents signaux de commande tels que ceux des feux de position avant et arrière, de l'essuie-vitre avant, des feux anti-brouillard arrière et de l'alimentation en énergie des réseaux VAN ou CAN ainsi que le signal R.C.D. de réveil commandé à distance utilisé par un calculateur multiplexé connecté à la ligne correspondante pour réveiller les autres calculateurs. Ainsi, tant que l'unité de traitement d'informations ne fonctionne pas de manière opérationnelle, sa sortie d'état de fonctionnement permet de maintenir les sorties de signal de commande dans leur état précédent afin d'assurer la continuité de la commande.

Par contre, dès que l'unité de traitement d'informations fonctionne de manière opérationnelle, le signal présent à la sortie 21 de celle-ci bascule pour inhiber le fonctionnement des moyens de maintien de sécurité et permettre donc une commande classique des organes fonctionnels à partir de l'unité et des signaux de sortie de celle-ci.

En fait, ce système se compose d'une partie matérielle formée par les moyens 19 pilotés par un signal d'autorisation de coupure de sécurité également appelé « AUT-COUPURE-SECU » sur ces figures.

Cette sortie de signal « AUT-COUPURE-SECU » permet de piloter la fonction de mémorisation et est délivrée par une sortie de signal qui passe en haute impédance lors d'une réinitialisation de l'unité et à laquelle on associe une résistance de polarisation basse. Lors d'une réinitialisation de l'unité, ce signal passe donc à l'état bas et l'autorisation de coupure n'est pas donnée. La fonction de mémoire est donc active.

Si un état haut est présent ou se présente sur une sortie de signal surveillée par la fonction de mémoire, celle-ci va maintenir l'état haut tant que les conditions de reprise en main par le logiciel ne sont pas établies. Dans ce cas, le signal « AUT-COUPURE-SECU » reste à l'état bas.

Les conditions de reprise en main par le logiciel sont données lorsque le signal « AUT-COUPURE-SECU » est positionné à l'état haut. Ceci se produit lorsque le logiciel a déterminé que toutes les données nécessaires à la commande des sorties sont stables et donc que la commande représente bien le fonctionnement opérationnel attendu.

Ce signal « AUT-COUPURE-SECU » n'est donc jamais positionné à l'état bas par le logiciel mais uniquement lors d'une réinitialisation du micro-contrôleur.

A titre d'exemple de données nécessaires à la commande, on peut citer les données relatives à l'état des capteurs, qui sont acquises par des entrées directes ou via les réseaux décrits précédemment tels que par exemple, de façon typique, l'état des commandes sous volant.

De plus, certaines demandes (et non pas les commandes) ne sont pas engendrées par des capteurs dans un état mécaniquement stable. Ce sont par exemple les demandes impulsionnelles (feux de route, anti-brouillard, etc). Pour garantir le retour dans l'état antérieur à la réinitialisation, ces demandes sont mémorisées en mémoire non volatile de type EEPROM, RAM sauvegardée, etc, à chaque changement d'état. Ainsi par exemple, à chaque demande d'allumage et d'extinction des feux anti-brouillard arrière, la demande est mémorisée. Lors de l'initialisation du logiciel, par sécurité, la commande envoyée est issue de la demande mémorisée. Tant que l'utilisateur n'effectue pas de nouvelle demande, c'est celle mémorisée qui est utilisée pour établir la commande.

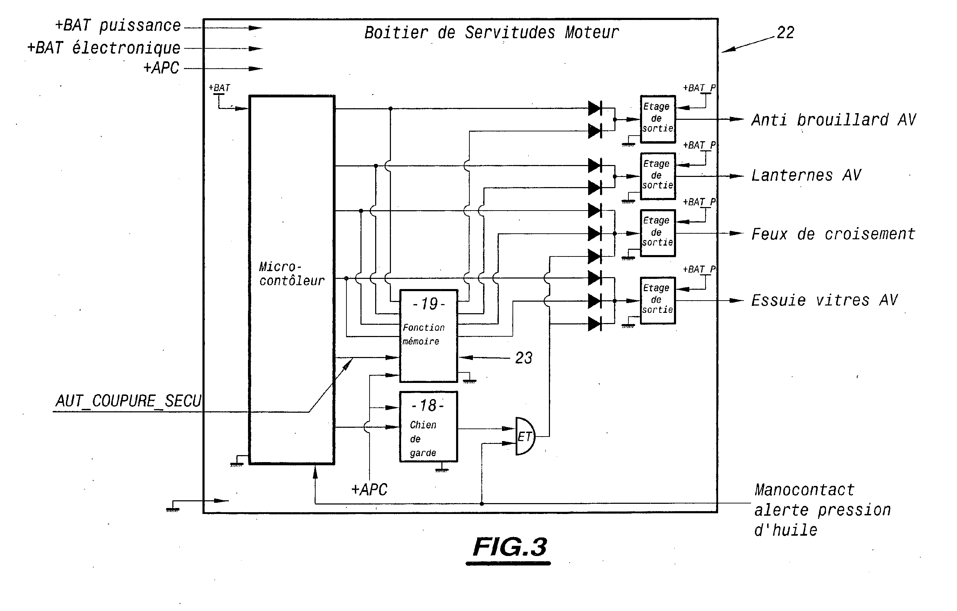

Bien entendu, une telle structure peut être également intégrée dans un boîtier de servitudes de moteur comme cela est illustré sur la figure 3. Sur cette figure, le boîtier de servitudes de moteur est désigné par la référence générale 22, les moyens de maintien étant désignés par la référence générale 23 et étant raccordés de manière analogue à ce qui a été décrit en regard de la figure 2, de sorte que l'on ne les décrira pas de façon plus détaillée par la suite.

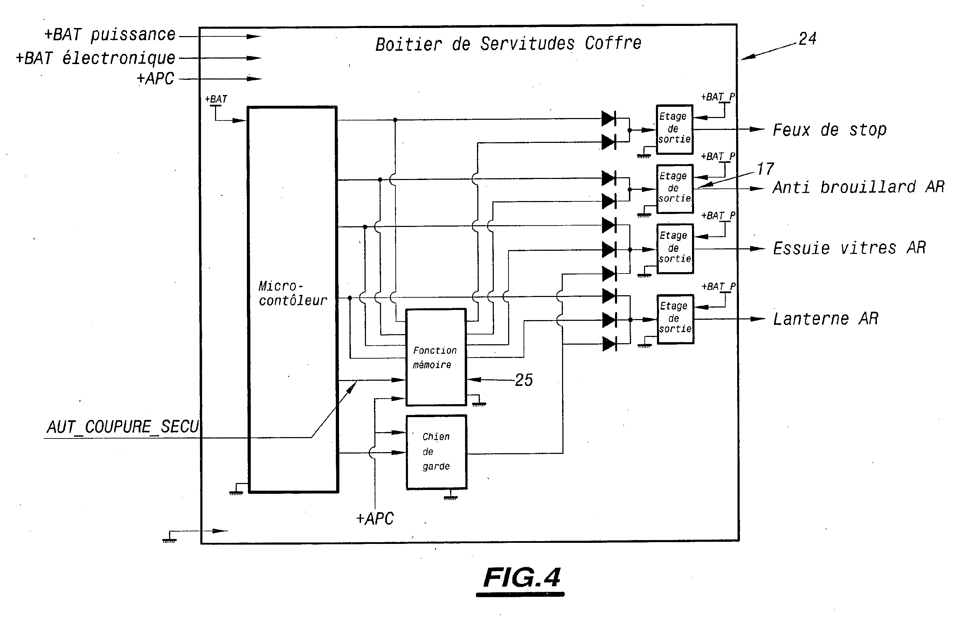

De même, une telle architecture peut être intégrée dans un boîtier de servitudes de coffre comme cela est illustré sur la figure 4, dans laquelle ce boîtier est désigné par la référence générale 24 et les moyens de maintien par la référence générale 25.

Seules les sorties de puissance à commander diffèrent entre les différents boîtiers.

On conçoit donc qu'une telle structure permet d'assurer une sécurité optimale contre une perte temporaire ou totale de différentes fonctions telles que l'éclairage/signalisation ou l'essuyage en cas d'initialisation du calculateur qui commande les sorties de puissance de ces fonctions, de garantir que la ou les alimentations gérées par un calculateur pour en alimenter d'autres ne seront plus coupées si le calculateur s'initialise, et enfin de garantir le maintien en l'état de certaines fonctions de sécurité en cas d'initialisation du calculateur, et de dysfonctionnement du logiciel.

Sur les figures 2, 3, et 4, on a illustré des diodes pour assurer la combinaison des signaux de sortie de l'unité et des moyens de maintien.

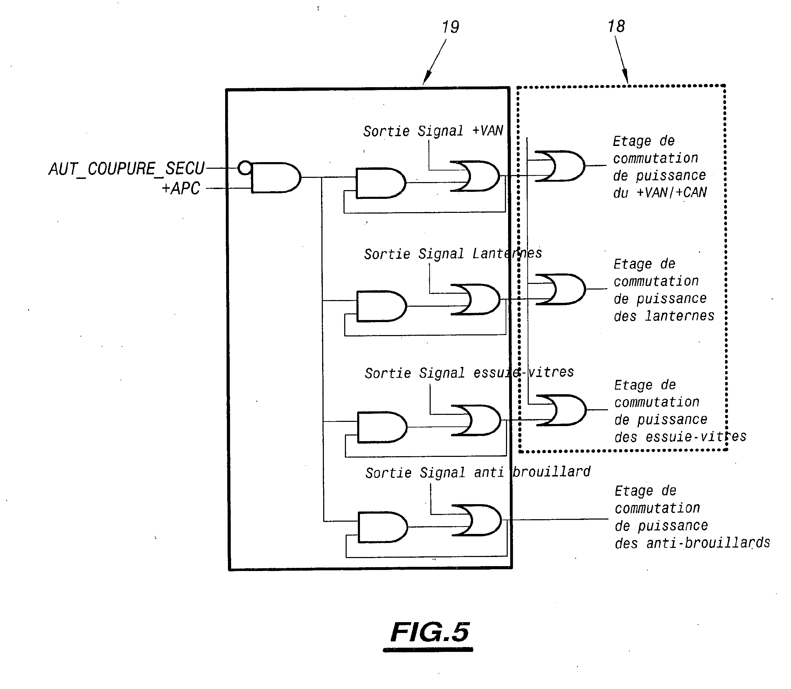

Bien entendu, d'autres modes de réalisation peuvent être envisagés comme celui illustré sur la figure 5 dans laquelle on utilise des portes ET/OU pour réaliser ces moyens de maintien.

Ainsi sur cette figure 5, on a illustré la réalisation des moyens de maintien 19 intégrés dans le boîtier de servitudes intelligent tel qu'illustré sur la figure 2 et qui reçoit donc en entrée une information issue du plus après contact (+APC) du véhicule et le signal « AUT-COUPURE-SECU » sur une entrée inversée d'une porte pour assurer la sécurisation souhaitée.

Bien entendu, d'autres modes de réalisation encore peuvent être envisagés.

## Revendications

1. Système de sécurisation de sorties de signaux de commande d'une unité de traitement d'informations embarquée à bord d'un véhicule automobile, dans lequel l'unité de traitement d'informations (14) est associée à des moyens (15) de commutation de puissance d'alimentation d'organes fonctionnels du véhicule, pilotés sur la base de signaux de commande issus de l'unité de traitement d'informations, **caractérisé en ce que** des moyens (19, 23, 25) de maintien de sécurité des signaux de commande délivrés par l'unité de traitement d'informations (14) sont interposés entre celle-ci et les moyens de commutation de puissance (15) et présentent une entrée d'inhibition (20) raccordée à une sortie (21) d'état de fonctionnement opérationnel de l'unité de traitement d'informations (14).

2. Système selon la revendication 1, **caractérisé en ce que** l'unité de traitement d'informations est intégrée dans un boîtier de servitudes intelligent (13).

3. Système selon la revendication 1, **caractérisé en ce que** l'unité de traitement d'informations est intégrée dans un boîtier de servitudes de moteur (22).

4. Système selon la revendication 1, **caractérisé en ce que** l'unité de traitement d'informations est intégrée dans un boîtier de servitudes de coffre (24).

5. Système selon l'une quelconque des revendications précédentes, **caractérisé en ce que** les moyens de maintien (19) sont réalisés à base de portes ET/OU.
